# EUROPEAN PATENT SPECIFICATION

(11) **EP 4 337 155 B1**
(45) Date of publication and mention of the grant of the patent: **19.11.2025**
(21) Application number: 22793704.2
(22) Date of filing: 21.09.2022
(51) Int. Cl.: A61G 5/02, A61G 5/10, B33Y 10/00, B33Y 80/00

(54) **ADDITIVE CARBON FIBRE MOLDING PROCESS**
ADDITIVES KOHLENSTOFFFASERFORMVERFAHREN
PROCÉDÉ ADDITIF DE MOULAGE D'UNE FIBRE DE CARBONE

(30) Priority: 22.09.2021 DE 102021124575
(43) Date of publication of application: 20.03.2024
(73) Proprietor: Sunrise Medical GmbH, 69254 Malsch/Heidelberg (DE)
(72) Inventor: STONE, Phillip, Burntwood WS7 3JQ (GB)
(74) Representative: Weber-Bruls, Dorothée
(86) International application number: PCT/EP2022/076243
(87) International publication number: WO 2023/046763

(56) References cited:
- WO-A1-2019/094443
- KR-A- 20210 001 442
- US-A- 5 233 743
- US-A1- 2006 087 098

## Description

The present invention relates to a process for preparing a customizable wheelchair frame, in line with the pre-amble of claim 1.

The nature of profound disabilities and the physical nature of disabled persons require that wheelchairs ideally must be bespoke to each user. This in turn necessitates a wide range of fittings, chassis and frames. While improvements in technology have allowed wheelchair designs to evolve over the years, resulting in new models having their own range of fittings, chassis and frames, so far wheelchairs are still manufactured more or less using the same manufacturing process. In doing so, there is still only a limited number of dimensional options with regard to the size of the frame and other parts of the wheelchair. Currently there are no commercially viable manufacturing methods to create an individual 'made to measure' wheelchair frame. Existing wheelchairs are at best manufactured with a modular system that involves molding several different sized frames which are used to get as close as possible to a customer's dimensions. This process limits the fit and ergonomics of the frame and reduces the amount of customization a customer expects from an active lifestyle wheelchair. In particular this holds true for carbon fiber made wheelchairs.

US 5,233,743 A describes a process of manufacturing a light weight wheelchair frame from fiber reinforced material. WO 2019/094443 A1 concerns a method of manufacturing hollow composite structures such as bike frames, etc., wherein the method comprises a step of preparing a mandrel from a sacrificial material which can be dissolved after the composite hollow part has been formed.

Therefore it is the object of the present invention to further develop the known manufacturing process for individual 'made to measure' wheelchair frames to overcome the drawbacks of the prior art, especially to provide a fully customizable wheelchair.

This object is solved by the features of the characterizing portion of claim 1.

Thus, a process for preparing a wheelchair frame of the present invention comprises preparing parts or segments of the wheelchair frame from a sacrificial material, wherein these parts or segments are used as mandrel in the preparation of the final wheelchair frame.

A new process has been developed that changes the way lightweight wheelchair frames are made. This involves, for example, 3D printing the wheelchair frame in a specialist material that creates a sacrificial mandrel. This mandrel can then be wrapped in a curable lightweight material, such as carbon fibre, by hand or automatically up to an appropriate thickness and cured at a specific temperature, pressure and time as to not affect the structural integrity of the sacrificial mandrel. The frame wrapped with the curable lightweight material has a two stage cure process, the first cure is to apply the structural carbon up to, for example, 90% of the material thickness. This is then (hand) worked back to create a smooth and level surface. The second stage cure is the final aesthetic layer of the curable lightweight material. At this point the mandrel can be removed by dissolving the frame in caustic solution. This leaves behind a lightweight hollow frame structure.

In particular, the present invention is directed to a process for preparing a wheelchair frame comprising:
a) preparing parts or segments of the wheelchair frame,
b) applying a curable lightweight material to the parts or segments obtained in step a);
c) curing the parts or segments obtained in step b);
d) applying a secondary aesthetic layer of lightweight material; and
e) curing the parts or segments obtained in step d),
wherein
in the preparing step a) the parts or segments of the wheelchair frame are prepared from a sacrificial material, wherein the overall structure of the parts or segments is porous, in particular mesh like, and
in a removing step between the curing step c) and the applying step d) the sacrificial material is removed in order to obtain hollow frame parts or hollow frame segments of the wheelchair made from the curable lightweight material, wherein dissolving liquid removes the sacrificial material in the removing step.

Further preferred embodiments are described in the sub-claims 2 to 8.

According to the invention in step a), the initial parts or segments of the wheelchair frame are prepared from a sacrificial material. These parts or segments prepared from the sacrificial material are used as mandrel, carrier, core or base body for preparing the final parts or segments used in assembling the wheelchair.

A sacrificial material according to the invention is a material which can be easily and completely removed in step d) of the inventive process. During the process, a curable lightweight material is applied to the sacrificial material, so that a final hollow frame part or segment consisting of the curable lightweight material can be obtained once the sacrificial material is removed. The sacrificial material is a material that can be removed, for example, by dissolving, developing, etching, heating, and/or cooling but is not limited to any of these techniques. According to the present invention, the sacrificial material is removed by dissolving.

For example, the material may be sacrificed by providing it with a pre-weakened area, which can be stressed in order to cause sacrifice of the material, or providing it with a perforation, along which the material can be torn apart. Another technique to remove the mandrel, when the mandrel is made from a material which can be weakened by contact with an appropriately selected fluid, is to wet the mandrel in order to weaken it with the fluid, then to remove the weakened mandrel. One way to wet the mandrel is to dip the entire part or segment in a tank of the fluid.

According to the present invention, the sacrificial material is dissolvable or developable or etchable component. Generally a sacrificial material should be used that has no interaction with the curable lightweight material to be applied, however, disintegrates being exposed to a solvent material that in return does also not interact with the curable lightweight material (composite structure). For example, the sacrificial material may be etched using a wet or dry chemistry, or be subjected to a CMP process and then recessed using wet or dry chemistry. Generally, the fluid to dissolve the sacrificial material may be water, an alkaline (caustic) or acid solution, an alcoholic solution or the like. In one embodiment, the fluid is an alkaline solution, i.e. a solution having a pH > 7.

In embodiments, the organic sacrificial material may be a polymer. For example, the sacrificial material may be made from any polymer which is dissolvable in water or another suitable solvent which does not damage the curable lightweight material. It may e.g. be made from poly(vinyl alcohol), PVA, which is soluble in water or from wax. Other examples are acrylonitrile butadiene styrene (ABS) which is soluble in acetone and polylactic acid or polylactide (PLA). The sacrificial material is not limited to any of the aforementioned materials.

The parts or segments of the wheelchair frame can be manufactured by any known means, depending on the sacrificial material used. In some embodiments of the invention the sacrificial material may be arranged by use of 3D-printing. 3D-printing is a quickly developing technology which can be used to precisely manufacture highly specialized structures. The obtainable dimensions and precision will depend on the manufacturing technology used. Complex geometries of what are to become the final wheelchair frame (or parts or segments thereof) can be made in an easily controllable manner. In principle any printable and dissolvable material can be used. The choice of the material will depend both on the application of the final component and on the manufacturing method used.

In one embodiment, the parts or segments of the wheelchair are prepared by 3D printing. For example, Fused Deposition Modelling (FDM) or Fused Filament Fabrication (FFF) belonging to the group of extrusion based additive manufacturing (EBAM) may be used. In this manufacturing process, a polymer is molten and extruded through a small nozzle. The resulting structure is therefore formed by fusing beads of thermoplastic material together to ultimately build up a layered structure. FDM is known as one of the strongest polymer-based additive manufacturing processes. The materials used in this process may be any of the aforementioned materials, such as thermoplastics, such as commodity plastic, higher performance materials including Nylon, polyetherimide (PEI) and polyether ether ketone (PEEK). In other words, in the embodiments involving 3D-printing, the material chosen should be printable with the actual printer being used.

For example, to form complex mandrels for the inventive purpose, materials such as SR-20, SR-30, SR-100, ST-130, ULTEM 9085 and DMX 100 (SLA) from Stratasys may be used but is not limited thereto. SR-30 is a sacrificial mandrel and DMX 100 is an extraction mandrel with unique properties. In one embodiment SR-30 is used.

The parts or segments of the wheelchair printed with the sacrificial material may have an external wall of a suitable thickness to provide the necessary strength and the basic form for the layers of the curable lightweight material. In one embodiment, the inner part of the printed sacrificial material has mesh-like structure to ensure flow through of any dissolving solution in step d) of the inventive process. In another embodiment, the inner part of the printed sacrificial material has in addition or alternatively a porous structure, as also described below. Further channels may be formed within the parts or segments to further improve the flow through. For example, a diamond shaped channel allows the solution to flow through the entire frame. The diamond shape gives suitable structural support. The solution can then eat through the thin wall section of the channel and into the infill and finally the outer wall thickness. Such channels are not limited to a diamond structure but may have a round, rectangular, triangular structure or the like, but is not limited thereto.

After the parts or segments of the wheelchair frame have been prepared from the sacrificial material in step a) by a method described above, some or all of the parts or segments may first be assembled using any assembling technique known in the art. For example, the parts or segments may be fitted together with press fit joints or by hot-air plastic welding. In such an embodiment, two halves of the wheelchair frame, the axle and the footrest may be obtained and used in the subsequent process steps. This may allow for a better access for any dissolving solution which may be applied later in the inventive process.

In further embodiments of the present invention, the parts or segments of the wheelchair frame prepared by any of the above-mentioned processes may be further processed before step b). For example, threaded inserts may be added to the parts or segments of the wheelchair frame to act as mounting points for componentry. The inserts may be similar in nature to traditional injection moulding threaded inserts that can be press fitted or threaded into the 3D printed mandrel. They may be left partially exposed so that carbon fibre can be wrapped around and under the head of the insert to secure them in the carbon frame when cured.

In another embodiment, jigs may be used in some key areas of the frame that require a tighter tolerance for components to fit. For example, a machined length of aluminum may be mounted to a footrest and castor pot section of the print before the frame is wrapped. The aluminum machined jig has a tolerance on its external dimensions, the aluminum maintains its structural integrity better than the 3D printed material. This allows the inside of the wrapped and cured frame to have a tolerance internal dimension that will allow precision componentry to be assembled with ease.

The mandrel frame may also be clamped into position using jigs to hold the two halves of the frame true together and ensure that the plastic mandrel does not move during the curing process.

These additional processing steps are not limited to the above embodiments.

In step b) of the inventive process a curable lightweight material is applied to the parts or segments or the previously assembled parts of the wheelchair frame. The curable lightweight material useable in the inventive process is a material that can be easily applied and provides the desired and necessary stiffness, tensile strength, low weight to strength ratio, high chemical resistance, high temperature tolerance, low thermal expansion and/or stability once it has been cured in a subsequent curing process. Exemplary materials that may be used in the present invention are composite materials, carbon fibre, aramid fibers such as Nomex, Teijinconex, Kevlar, Technora, glass fibre, and carbon fibre plant based alternatives, such as a flax seed composite, or mixtures thereof, but are not limited thereto. In one embodiment the material is a composite material. In a preferred embodiment the material is carbon fibre.

The curable lightweight material can be applied by any method that is suitable for the respective material. For example, the material may be applied by automated or fully automated processes. In one embodiment the curable lightweight material is applied manually. The curable lightweight material may be applied in one layer or may be applied in two or more layers with the same or different thickness. The layer(s) of the curable lightweight material may be from the same material or layers of different materials may be applied.

In one embodiment, not all of the curable lightweight material is applied, but only up to about 80%, up to about 85%, up to about 90%, up to about 95% or more of the amount of the desired material is applied before curing the parts or segments of the wheelchair. This allows to prepare the rigid wheelchair frame which can then be finished in a subsequent process. In one embodiment, lightweight material is applied up to about 90% of the amount of the desired material. In another embodiment 100% of the lightweight material is applied to the sacrificial material. The amount of the lightweight material that is applied in this first step may depend on the desired thickness that should be achieved or may depend on any other property which may be set by the applied amount, such as stiffness, tensile strength, low weight to strength ratio, high chemical resistance, high temperature tolerance, low thermal expansion and/or stability.

The curable lightweight material thickness may be, for example, in the range of about 1 mm to about 3 mm, such as about 1.25 mm to about 2.75 mm, about 1.5 mm to 2.5 mm, or about 1.75 to about 2 mm. Preferably, the curable lightweight material thickness is about 1.75 to about 2 mm. This thickness may be achieved by applying 3-times a structural layers of, for example, carbon fibre at 0.6 mm per layer followed by a final aesthetic layer of around 0.2 mm thickness. Other material layer thickness are also encompassed by the present invention.

The thickness can be easily increased or decreased by altering the amount of layers of the curable lightweight material or by altering the thickness of each material layer thickness. Generally, there is no defined limit but it is constrained by material layer thickness increments.

After all or part of the curable lightweight material is applied to the sacrificial mandrel in step b) of the inventive process, the parts or segments are cured in a curing process (first stage curing). The parameters of the curing process are to be chosen depending on the materials used. These parameters may generally be critical to the success of the process. Both roomtemperature and elevated-temperature curing methods can be used. In one embodiment, the curing takes place in an autoclave using specific autoclave pressures. For example, in case the curing temperature is too high, this may result in the mandrel melting and the cured frame to be compressed out of the shape. A too high pressure may have a detrimental effect on the finish as this increases the depth of the bagging creases. The skilled person is fully aware of suitable temperature ranges and pressure ranges to be applied depending on the sacrificial material used and depending on the curable lightweight material used.

For example, when using standard cure carbon fibre, the settings may be about 20 psi and 90 °C. Lower temperatures may also be applied, such as for example 85 °C, 80 °C or even lower. Lower temperatures may not require applying any pressure. With the latter conditions a smoother process for the respective materials is used. Similar conditions may be used for other materials. The skilled person is fully aware of how the conditions may be suitably adapted depending on the materials used.

In one embodiment, a two-stage cure approach can be applied. First, an initial cure at a lower temperature within a recommended temperature and pressure combinations can be applied. Then, the part or segment is dissolved in a suitable solvent to remove the sacrificial material. Then, in a subsequent step, a second, post-cure is completed to achieve the desired material property and appearance. By applying this two-stage approach it can be assured that the parts or segments made are not detrimentally effected during the dissolving or initial curing process as in the first stage which has its surface exposed to chemicals during step d) of the inventive process.

Optionally, after the above curing process, one or more further layer(s) of at least one curable lightweight material may be applied to the parts or segments of the wheelchair frame. This may aid in further improving the stiffness, tensile strength, low weight to strength ratio, high chemical resistance, high temperature tolerance, low thermal expansion and/or stability of the wheelchair frame. The one or more further layers may be from the same material as the first layer(s) applied in step b) or may be from one or more different materials. In one embodiment both the first layer applied in step b) and the one or more further layer(s) applied after step c) are made from carbon fibre. A second stage curing process is conducted then, wherein the temperature and pressure is higher than in the first stage curing mentioned above.

The one or more further layer(s) may have any thickness if required. For example, the further layer(s) may have a thickness as described above or may have a thickness of about 0.5 mm, 0.4 mm, 0.3 mm or 0.2 mm or even thinner. In one embodiment the one or more further layer(s) has a thickness of about 0.2 mm. The one or more further layer(s) can also be used to apply different colours of the curable lightweight material or weave patterns. The one or more further layer(s) can be cured as mentioned above or by using a low temperature oven cure only carbon fibre which reduces any risk of movement during curing (the previous carbon layup stage can soften when heated up and potentially move with pressure).

In the next step of the inventive process, the sacrificial material is removed in order to obtain the final (hollow) wheelchair frame, (hollow) wheelchair frame parts or (hollow) wheelchair frame segments. As explained above, depending on the sacrificial material used, different possibilities may be used to fully remove the sacrificial material. In one embodiment the cured frame (or parts or segments thereof) is submerged in an appropriate solution, such as an acidic solution, an caustic solution, an alcohol, water or the like. The caustic solution may be made from commonly known basic substances, such as LiOH, NaOH, KOH, Mg(OH)₂, CaCO₃, or mixtures thereof, but is not limited thereto. Generally, the wheelchair frame, parts or segments thereof are submerged in the respective solvent or solution for a sufficient period of time, i.e. a time until all of the sacrificial material has been dissolved or can be removed. If necessary, elevated temperatures may be used to ensure full removal of the sacrificial material and/or to expedite the removal process. Temperatures of 50 °C to 100 °C can be used, such as 70 °C.

The parts or segments of the frame or the entire frame can be submerged in the respective solution within specialist equipment for around up to 12 hours, up to 24 hours, up to 48 hours or longer. Depending on the materials used, even shorter times may be used. The concentration of the respective solution may depend on the materials used. For example, in case of a basic (caustic) solution, the respective concentration may be in the range of between about 2 to 4%, such as 3%. In one embodiment, the concentration is 3%.

Before the step of removing the sacrificial material, any straight and easily accessible frame segments may be removed (e.g. by drilling or the like). Also, any metallic jigs such as a footrest or castor pot jig may be manually removed.

In one embodiment, the sacrificial material is SR-30 and the removal of SR-30 is carried out in a NaOH diluted water solution. The concentration may be as defined above.

After the removal of the sacrificial material, the now hollow wheelchair have a secondary stage of lightweight material added in step e) of the inventive process. The second application of the lightweight material may be applied after the existing hollow frame has been further processed, for example sanded down to a smooth level finish. This allows a thin aesthetic layer of material to be applied without the need of any additional sanding and prevents the risk of damage to the final thinner layer of material. This also means that the final layer has not been exposed to the dissolving chemical and has not been detrimentally affected by it visually. The secondary layer may have any thickness if required. For example, the further layer(s) may have a thickness as described above or may have a thickness of about 0.5 mm, 0.4 mm, 0.3 mm or 0.2 mm or even thinner. The secondary cure can be done with the same parameters mentioned above or if required different parameters to achieve the finished cured frame. After this step, the final wheelchair can be assembled.

Thus, in one embodiment the inventive process comprises:
a) preparing parts or segments of the wheelchair frame from a porous or mesh-like sacrificial material;
b) fitting the parts or segments together to form larger parts of the wheelchair frame;
c) applying a part of the curable lightweight material to the larger parts of the wheelchair frame obtained in step b);
d) curing the larger parts of the wheelchair frame obtained in step c);
e) removing the sacrificial material by dissolving in order to obtain larger hollow parts of the wheelchair frame made from the curable lightweight material.
f) applying one or more further layers of one or more curable lightweight materials to the larger hollow parts of the wheelchair frame obtained
g) curing the larger hollow parts of the wheelchair frame obtained in step f).

"Larger" in the sense of the present invention means that the parts that have been fitted together are larger in size than the individual parts before assembly. Thus, larger parts means parts of larger size.

The present invention is beneficial to prepare a wheelchair. The process provided herein allows for critical structural areas of the frame to be reinforced locally with additional curable lightweight material layup to improve rigidity and reliability. This also allows non-critical areas to be reduced in material thickness, this allows the frame to be lighter than frames made through traditional molding techniques. The inventive process allows the user to have a nearly unlimited number of dimensions including key frame dimensions that are not limited to modularity and allow the frame to be ergonomically fitted to each individual while maintain costs at a low level. The inventive method offers significant design freedom and the ability to quickly iterate designs and dimensions.

The present invention will be better understood from the following description of preferred embodiments which are described with respect to drawings, in which:
- Figure 1a: shows a cross section view of part or segment prepared from a sacrificial material;
- Figure 1b: shows another embodiment of a cross section view of part or segment prepared from the sacrificial material;
- Figures 2a and 2b: show a schematic view of a part or segment prepared from the sacrificial material into which threaded inserts have been added;
- Figures 3a and 3b: show a cross section view of part or segment prepared from the sacrificial material, wherein jigs have been fitted to the castor and footrest;
- Figure 4: shows the complete parts or segments of the wheelchair frame prepared from the sacrificial material;
- Figure 5: show an assembled part of the wheelchair frame with a carbon fibre wrapping;
- Figure 6: shows the part of the wheelchair of Figure 3, after the (first) curing process and the application of the final (aesthetic) layer of carbon fibre;
- Figure 7: shows an assembled wheelchair frame prepared according to a process of the present invention; and
- Figure 8: shows an image of the finished wheelchair.

The following description is merely exemplary in nature and is not intended to limit the present disclosure, application, or uses.

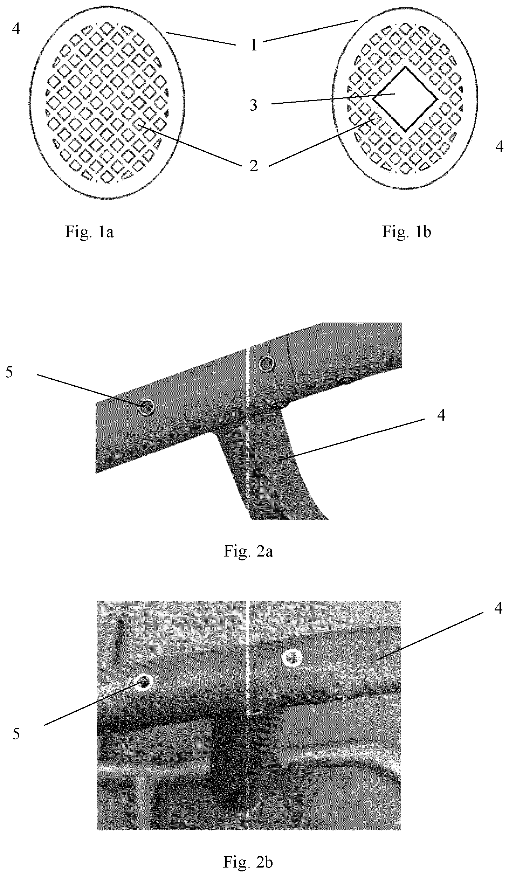

Figs. 1a and 1b are cross section views of different embodiments of a part or segment prepared from sacrificial material. The overall structure is porous (mesh like) so that the dissolving liquid can fully remove the sacrificial material in the removing step. In Fig. 1b a diamond shaped channel is formed that allows the solution to flow through the entire frame. The diamond shape gives suitable structural support. The solution can then eat through the thin wall section of the channel and into the infill and finally the outer wall thickness.

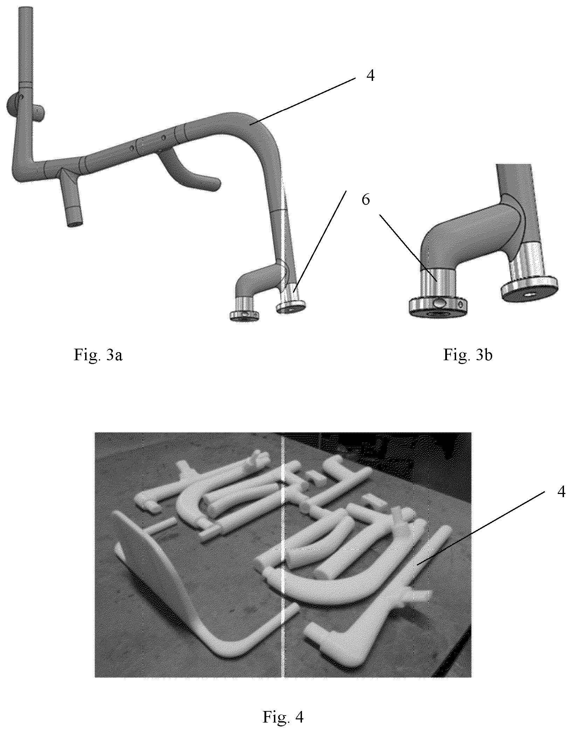

In one exemplary embodiment, the frame mandrel of the wheelchair is 3D printed to the respective customers dimensions. In this embodiment, the frame is printed in parts or segments (4). The Fused Deposition Modelling (FDM) technique is applied, wherein the material is the Stratasys SR-30 support material. Here, the wall thickness of the prepared parts or segments (4) is about 3 mm. Fig. 4 depicts the printed parts and segments of the wheelchair frame.

In the next step the parts or segments (4) are fitted together, for example with press fit joints, to make two halves of the wheelchair frame, the axle and the footrest. This allows an even better access for, for example, a dissolving solution later in the process.

Figs. 2a and 2b show an alternative embodiment, wherein additional threaded inserts have been incorporated into the parts or segments (4). Fig. 2a shows that the threaded inserts are left partially exposed so that carbon fibre can be wrapped around and under the head of the insert to secure them in carbon frame when cured. Fig. 2b shows the part or segment (4) with threaded inserts after a carbon fibre material has been wrapped and cured.

Alternatively, Figs. 3a and 3b show that aluminum jigs have been fitted to the castor and footrest of a printed part or segment (4) of the wheelchair frame (7). The aluminum machined jig has a tolerance on its external dimensions, the aluminum maintains its structural integrity better than the 3D printed material. This allows the inside of the wrapped and cured frame to have a tolerance internal dimension that will allow precision componentry to be assembled with ease.

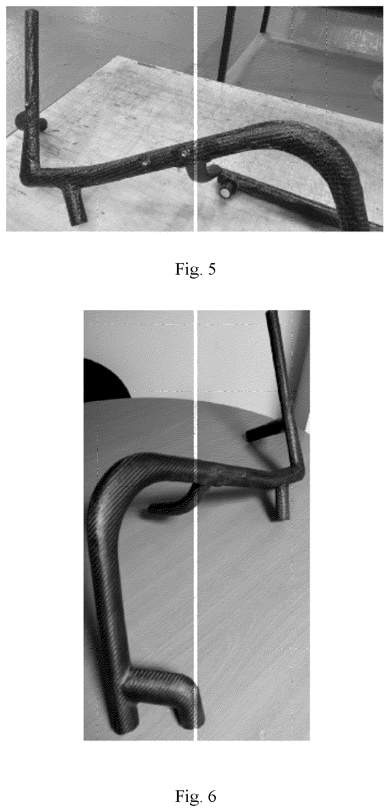

The (part of the) assembled frame described above is wrapped with carbon fibre (Fig. 5). After laying the carbon fibre up to 90% of the desired material thickness, a first stage cure is applied in an autoclave or oven. In this embodiment a temperature of 80 °C is applied for a period of about 11 hours.

In the next step the cured frame is then trimmed to a smooth finish.

The cured frame is submerged in a caustic NaOH diluted solution in an appropriate container with good circulation at a temperature of 70 °C which will dissolve the SR-30 FDM mandrel from within the carbon fibre frame.

Further, a final aesthetic layer of carbon fibre is then applied to the frame (Fig. 6). The second cure prevents any finish issues created by submerging the frame in solution. The two stage cure process prevents any further sanding or trimming on the final layup which prevents imperfections in the final layer and finish. In this embodiment, the second cure is carried out at a temperature of 80 °C for about 8 hours.

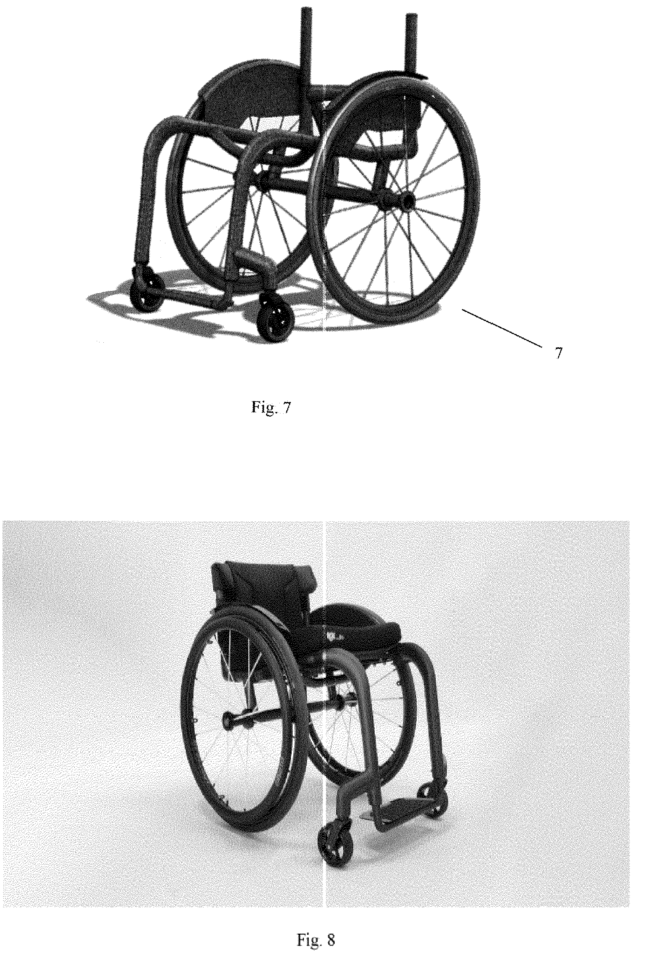

In the final step the frame can be finished and assembled to the final wheelchair (7) (Figs. 7 and 8).

The features disclosed in this specification, the claims and the figures maybe important for the claimed invention, taken separately or in any combination, for the respective different embodiments.

### Reference signs

- 1: external wall
- 2: mesh structure / printed infill
- 3: diamond hollow channel
- 4: parts or segments of wheelchair frame
- 5: threaded inserts
- 6: jigs
- 7: wheelchair frame

## Claims

1. Process for preparing a wheelchair frame (7) comprising:
a) preparing parts or segments (4) of the wheelchair frame;
b) applying a curable lightweight material to the parts or segments (4) obtained in step a);
c) curing the parts or segments (4) obtained in step b);
d) applying a secondary aesthetic layer of lightweight material; and
e) curing the parts or segments obtained in step d),
**characterised in that**
in the preparing step a) the parts or segments (4) of the wheelchair frame are prepared from a sacrificial material, wherein the overall structure of the parts or segments (4) is porous, in particular mesh like, and
in a removing step between the curing step c) and the applying step d) the sacrificial material is removed in order to obtain hollow frame parts or hollow frame segments of the wheelchair made from the curable lightweight material, wherein dissolving liquid removes the sacrificial material in the removing step.

2. The process of claim 1, wherein the parts or segments (4) of the wheelchair are prepared by 3D printing techniques.

3. The process of claim 1 or 2, wherein at least some of the parts or segments (4) are fitted together before step b).

4. The process of any one of the preceding claims, wherein step d) comprises placing said substrate into a solvent or developer solution or etching solution which is capable of dissolving or developing or etching the said sacrificial layer.

5. The process of any one of the preceding claims, wherein the sacrificial material is dissolved in an alkaline or acid solution.

6. The process of any one of the preceding claims, wherein the curable lightweight material is carbon fibre.

7. The process of any one of the preceding claims, wherein one or more further layer(s) of at least one curable lightweight material is applied to the parts or segments of the wheelchair frame after step c) and cured.

## Patentansprüche

1. Verfahren zur Herstellung eines Rollstuhlrahmens (7), umfassend:
a) Herstellen von Teilen oder Segmenten (4) des Rollstuhlrahmens;
b) Aufbringen eines härtbaren leichten Materials auf die in Schritt a) erhaltenen Teile oder Segmente (4);
c) Aushärten der in Schritt b) erhaltenen Teile oder Segmente (4);
d) Aufbringen einer sekundären ästhetischen Schicht aus leichtem Material; und
e) Aushärten der in Schritt d) erhaltenen Teile oder Segmente,
**dadurch gekennzeichnet, dass**
in dem Herstellungsschritt a) die Teile oder Segmente (4) des Rollstuhlrahmens aus einem Opfermaterial hergestellt werden, wobei die Gesamtstruktur der Teile oder Segmente (4) porös, insbesondere netzartig, ist, und
in einem Entfernungsschritt zwischen dem Aushärtungsschritt c) und dem Aufbringungsschritt d) das Opfermaterial entfernt wird, um hohle Rahmenteile oder hohle Rahmensegmente des Rollstuhls, die aus dem härtbaren leichten Material hergestellt sind, zu erhalten, wobei eine auflösende Flüssigkeit das Opfermaterial in dem Entfernungsschritt entfernt.

2. Verfahren nach Anspruch 1, wobei die Teile oder Segmente (4) des Rollstuhls mittels 3D-Druckverfahren hergestellt werden.

3. Verfahren nach Anspruch 1 oder 2, wobei wenigstens einige der Teile oder Segmente (4) vor Schritt b) zusammengefügt werden.

4. Verfahren nach einem der vorangehenden Ansprüche, wobei Schritt d) das Einbringen des Substrats in ein Lösemittel oder eine Entwicklerlösung oder eine Ätzlösung umfasst, das/die in der Lage ist, die Opferschicht aufzulösen oder zu entwickeln oder zu ätzen.

5. Verfahren nach einem der vorangehenden Ansprüche, wobei das Opfermaterial in einer alkalischen oder sauren Lösung aufgelöst wird.

6. Verfahren nach einem der vorangehenden Ansprüche, wobei das härtbare leichte Material Carbonfaser ist.

7. Verfahren nach einem der vorangehenden Ansprüche, wobei eine oder mehrere weitere Schicht(en) aus wenigstens einem härtbaren leichten Material nach Schritt c) auf die Teile oder Segmente des Rollstuhlrahmens aufgebracht und ausgehärtet wird/werden.

## Revendications

1. Procédé destiné à préparer un cadre de fauteuil roulant (7) comprenant :
a) préparer des parties ou segments (4) du cadre de fauteuil roulant ;
b) appliquer un matériau léger durcissable sur les parties ou segments (4) obtenus à l'étape a) ;
c) durcir les parties ou segments (4) obtenus à l'étape b) ;
d) appliquer une couche esthétique secondaire de matériau léger ; et
e) durcir les parties ou segments obtenus à l'étape d),
**caractérisé en ce que**
dans l'étape de préparation a) les parties ou segments (4) du cadre de fauteuil roulant sont préparées à partir d'un matériau sacrificiel, dans lequel la structure globale des parties ou segments (4) est poreuse, en particulier en forme de maillage, et
dans une étape de retrait entre l'étape de durcissement c) et l'étape d'application d) le matériau sacrificiel est retiré afin d'obtenir des parties de cadre creuses ou des segments de cadre creux du fauteuil roulant formés à partir du matériau léger durcissable, dans lequel le liquide de dissolution retire le matériau sacrificiel dans l'étape de retrait.

2. Procédé selon la revendication 1, dans lequel les parties ou segments (4) du fauteuil roulant sont préparés par des techniques d'impression 3D.

3. Procédé selon la revendication 1 ou 2, dans lequel au moins certains ou certaines des parties ou segments (4) sont assemblés avant l'étape b).

4. Procédé selon l'une quelconque des revendications précédentes, dans lequel l'étape d) comprend l'étape destinée à placer ledit substrat dans un solvant ou une solution de développement ou une solution de gravure qui est capable de dissoudre ou de développer ou de graver ladite couche sacrificielle.

5. Procédé selon l'une quelconque des revendications précédentes, dans lequel le matériau sacrificiel est dissous dans une solution alcaline ou acide.

6. Procédé selon l'une quelconque des revendications précédentes, dans lequel le matériau léger durcissable est une fibre de carbone.

7. Procédé selon l'une quelconque des revendications précédentes, dans lequel une ou plusieurs couche(s) supplémentaire(s) d'au moins un matériau léger durcissable sont appliquées sur les parties ou segments du cadre de fauteuil roulant après l'étape c) et durcies.
